# EUROPEAN PATENT APPLICATION

(11) **EP 2 403 200 A1**
(43) Date of publication of application: **04.01.2012**
(21) Application number: 10168115.3
(22) Date of filing: 01.07.2010
(51) Int. Cl.: H04L 29/06

(54) **Method for performing multi-connection communication**

(71) Applicant: Alcatel Lucent, 75007 Paris (FR)
(72) Inventor: Scharf, Michael, 70569, Stuttgart (DE); Banniza Thomas-Rolf, 71701, Schwieberdingen (DE)
(74) Representative: Chaffraix, Sylvain

(57) **Abstract**

The invention relates to a method for carrying a communication between two network elements of a telecommunication's network, especially telecommunication's terminals for the Internet or an intranet, with at least one of which having available at least two independent access paths (A1, A2) to the telecommunication's network, wherein initially from a first, initiating network element (A) a first connection (P1PR1) to a second (B), responding network element is set up that is directed via a first access path (A1) of the at least two independent access paths (A1, A2), where the first connection (P1PR1) is controlled by a first protocol (PR1) apt for controlling single communication paths, where subsequent to the set-up of the first connection (P1PR1) either of the involved network elements tries to set up at least one further connection (P2PR2) to the other involved network element (B), and where on first set-up of a further connection the first connection (P1PR1) is supplemented or replaced by an other further connection (P1PR2), and the mode of communication is changed such that all further connections together are controlled by a common second protocol (PR2), to a network element, a computer program, and a computer program product.

## Description

### Field of the invention

The invention relates to a method for carrying a communication between two network elements of a telecommunication's network, especially telecommunication's terminals for the Internet or an intranet, with at least one of which having available at least two independent access paths to the telecommunication's network.

The invention further relates to a network element of a telecommunication's network, especially telecommunication's terminal for the Internet or an intranet.

The invention further relates to a computer program for carrying a communication between two network elements of a telecommunication's network, especially telecommunication's terminals for the Internet or an intranet.

The invention further relates to a computer program product for carrying a communication between two network elements of a telecommunication's network, especially telecommunication's terminals for the Internet or an intranet, comprising a computer readable medium having a computer readable program.

The invention further relates to transferring a computer program.

### Background

The Internet Engineering Task Force (IETF) currently develops a Transmission Control Protocol (TCP) extension that shall realize multipath transport over potentially different paths.

A TCP-based data transport over multiple paths and the corresponding signaling must fulfill the following requirements:
- It must be backwards-compatible as far as possible to a normal TCP connection, and minimize the changes required in TCP, in order to be deployable in the Internet.
- It must be robust and take into account that middleboxes (proxies, firewalls, etc.) may affect the data transmission.
- It must be simple and extensible.

There are existing solutions for realizing Multipath TCP (MPTCP), but they are suboptimal with respect to these criteria.

At the moment the most relevant contribution is to be found in http://www.ietf.org/internet-drafts/draft-ietf-mptcp-multiaddressed-00.txt.

The problem to be solved is to find an improved solution.

### Summary

This problem according to the invention is solved by a method for carrying a communication between two network elements of a telecommunication's network, especially telecommunication's terminals for the Internet or an intranet, with at least one of which having available at least two independent access paths to the telecommunication's network, wherein initially from a first, initiating network element a first connection to a second, responding network element is set up that is directed via a first access path of the at least two independent access paths, where the first connection is controlled by a first protocol apt for controlling single communication paths, where subsequent to the set-up of the first connection either of the involved network elements tries to set up at least one further connection to the other involved network element, and where on first set-up of a further connection the first connection is supplemented or replaced by an other further connection, and the mode of communication is changed such that all further connections together are controlled by a common second protocol.

The problem according to the invention further is solved by a network element of a telecommunication's network, especially telecommunication's terminal for the Internet or an intranet, that is built such that it can operate as initiating or as responding network element according to a method for carrying a communication between two network elements of a telecommunication's network, with at least one of which having available at least two independent access paths to the telecommunication's network, wherein initially from a first, initiating network element a first connection to a second, responding network element is set up that is directed via a first access path of the at least two independent access paths, where the first connection is controlled by a first protocol apt for controlling single communication paths, where subsequent to the set-up of the first connection either of the involved network elements tries to set up at least one further connection to the other involved network element, and where on first set-up of a further connection the first connection is supplemented or replaced by an other further connection, and the mode of communication is changed such that all further connections together are controlled by a common second protocol.

The problem according to the invention further is solved by a computer program for carrying a communication between two network elements of a telecommunication's network, especially telecommunication's terminals for the Internet or an intranet, wherein said computer program, when executed on a network element of a telecommunication's network, that is built such that it can operate as initiating or as responding network element according to a method for carrying a communication between two network elements of a telecommunication's network, with at least one of which having available at least two independent access paths to the telecommunication's network, wherein initially from a first, initiating network element a first connection to a second, responding network element is set up, that is directed via a first access path of the at least two independent access paths, where the first connection is controlled by a first protocol apt for controlling single communication paths, where subsequent to the set-up of the first connection either of the involved network elements tries to set up at least one further connection to the other involved network element, and where on first set-up of a further connection the first connection is supplemented or replaced by an other further connection, and the mode of communication is changed such that all further connections together are controlled by a common second protocol, causes said network element to operate accordingly as initiating or as responding network element.

The problem according to the invention further is solved by a computer program product for carrying a communication between two network elements of a telecommunication's network, especially telecommunication's terminals for the Internet or an intranet, comprising a computer readable medium having a computer readable program, wherein said computer program, when executed on a network element of a telecommunication's network, that is built such that it can operate as initiating or as responding network element according to a method for carrying a communication between two network elements of a telecommunication's network, with at least one of which having available at least two independent access paths to the telecommunication's network, wherein initially from a first, initiating network element a first connection to a second, responding network element is set up that is directed via a first access path of the at least two independent access paths, where the first communication path is controlled by a first protocol apt for controlling single communication paths, where subsequent to the set-up of the first communication path either of the involved network elements tries to set up at least one further communication path to the other involved network element, and where on first set-up of a further access path the first connection is supplemented or replaced by an other further connection, and the mode of communication is changed such that all communication paths together are controlled by a common second protocol, causes said network element to operate accordingly as initiating or as responding network element.

The problem according to the invention further is solved by transferring a computer program for carrying a communication between two network elements of a telecommunication's network, especially telecommunication's terminals for the Internet or an intranet, wherein said computer program, when executed on a network element of a telecommunication's network, that is built such that it can operate as initiating or as responding network element according to a method for carrying a communication between two network elements of a telecommunication's network, with at least one of which having available at least two independent access paths to the telecommunication's network, wherein initially from a first, initiating network element a first connection to a second, responding network element is set up that is directed via a first access path of the at least two independent access paths, where the first connection is controlled by a first protocol apt for controlling single communication paths, where subsequent to the set-up of the first connection either of the involved network elements tries to set up at least one further connection to the other involved network element, and where on first set-up of a further connection the first connection is supplemented or replaced by an other further connection, and the mode of communication is changed such that all connections together are controlled by a common second protocol, causes said network element to operate accordingly as initiating or as responding network element.

The basic idea is to start with a normal single path connection using a first protocol foreseen for such connections. Then from either of the both sides a trial is made to set up a further single path connection. Such trial and set-up is controlled by the first protocol. Once such trial is successful, the original first connection is supplemented or replaced by an other further connection. Then the first protocol is ceased and all connections over potentially different communication paths together are controlled by a common second protocol.

It should be mentioned that the mere replacing of the first protocol with the second protocol within the original first connection in contrast to normal use of the term connection is considered here as replacing the connection.

The first protocol preferably is the normal TCP protocol. In contrast to using an enhanced version of the normal protocol, as recommended in the prior published recommendations, this alone is a major step in fulfilling the requirements mentioned above.

Dependent on the network elements on the path between the two endpoints, the so-called middleboxes, it may be necessary to set up all subsequent connections from the same side as the initial single path connection. Then it might be also necessary to beforehand negotiate such subsequent set-up. This then is performed using the first protocol.

Further such trials can be made to add still further connections.

Further embodiments of the invention are to be found in the subclaims and in the following description.

### Brief Description of the Figures

In the following the invention will be described with the aid of the accompanying drawings.
- Figure 1: shows the course of a communication between two network elements according to an example of a method according to the invention.
- Figure 2: shows a layered model of a network element according to the invention.

### Description of the Embodiments

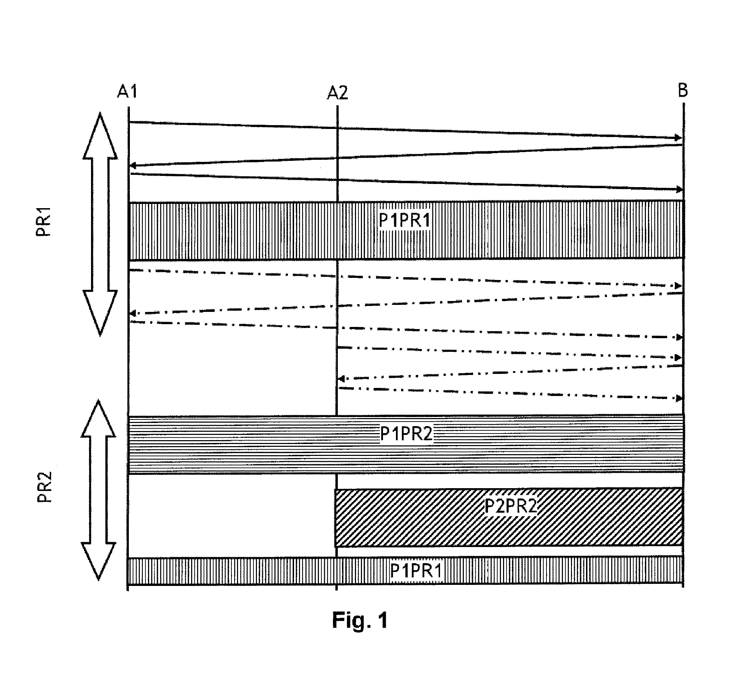

Based on the example shown in figure 1 the invention now will be described in detail.

Figure 1 shows top down the course of a communication between two network elements A and B. Network element A is considered to have two independent accesses to the telecommunication's network, e.g. an optical access via a passive optical network PON using a first address A1, and a wireless access via a UMTS link using a second address A2. Network element B is considered to have only one access to the telecommunication's network using address B.

What here is called an address in practice is an IP address.

Network element A starts setting up an initial communication between address A1 and address B of network element B. The signaling is shown in three drawn-through messages not labeled; the consequent communication P1PR1 uses a first path P1 and a first protocol PR1 and is shown in a vertical pattern.

It is to be pointed out that the protocol PR1 is the protocol normally used in such network, nowadays the well-known TCP/IP protocol. It is recommended that this protocol is slightly modified to test whether both network elements support the method according to the invention. This can be achieved by an additional option in the packet header of TCP.

Based on the information exchanged using communication P1PR1 network elements A and B can decide to set up a new communication using two paths P1 and P2 and a second protocol PR2.

The changeover between this first phase with only one connection over one path using the first protocol and the second phase with communication over two paths is initiated using a signaling between address A1 of network element A and address B of network element B, shown in three dot-dashed lines and a signaling between address A2 of network element A and address B of network element B, shown in three dot-dot-dashed lines.

The setup procedure of the additional connections is realized in a manner ensuring that both network elements can distinguish connections controlled by the second protocol PR2 from those controlled by the first protocol PR1.

As a result we have two connections, P1PR2, shown in a horizontal pattern, and P2PR2, shown in a diagonal pattern, using two separate paths P1 and P2 controlled by the second protocol PR2.

Now in a similar way further paths could be added.

In contrast to using the TCP protocol in a single path connection the second protocol advantageously may use a type-length-value format, known as TLV format, building a Multi-Connection TCP protocol (Multi-Connection Transfer Control Protocol = MCTCP). Such Multi-Connection TCP protocol is some kind of enhanced version of the normal protocol like the above mentioned or similar Multi-Paths Transfer Control Protocols (MPTCP). Preferably the way of enhancing the normal protocol is slightly different from such known protocols.

The connection P1PR1 may remain established as a fall-back position, but it may be unused as long as at least one connection using the second protocol PR2 is readily working.

The above example supposed to have the two or more independent paths at the side of the access networks. Likewise a server as one of the involved network elements could have two access paths via two independent provider networks. Then in principle the use of multi-connection communication could work just the same. As end-users often use firewalls it should be the und user' network elements that open the paths. In such situation the server could announce to the user's terminal as the other involved network element that it could be reached via a still further address then the one already used.

Multi-connection communication of this kind of course also is possible between any two network elements within the telecommunication's network.

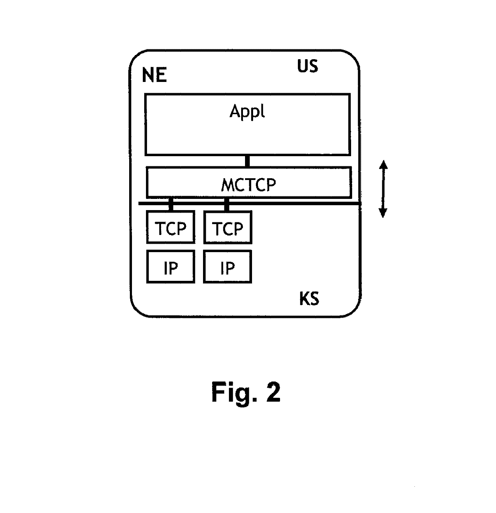

The layered model of a network element NE according to the invention as shown in figure 2 on top includes at the user side US an application Appl and at the bottom at the kernel side KS two TSP/IP connections illustrated by two boxes each for the usual two layers. The multi-Connection Transfer Control Protocol MCTCP represents the second protocol PR2 and aggregates the two TCP/IP connections transparently towards the application as if it was a single connection only. The Multi-Connection Transfer Control Protocol MCTCP in this example is realized in the user side US, but can be realized in the kernel side KS or with a combination of both (double arrow).

## Claims

1. Method for carrying a communication between two network elements of a telecommunication's network, especially telecommunication's terminals for the Internet or an intranet, with at least one of which having available at least two independent access paths (A1, A2) to the telecommunication's network, **wherein** initially from a first, initiating network element (A) a first connection (P1PR1) to a second (B), responding network element is set up that is directed via a first access path (A1) of the at least two independent access paths (A1, A2), where the first connection (P1PR1) is controlled by a first protocol (PR1) apt for controlling single communication paths, where subsequent to the set-up of the first connection (P1PR1) either of the involved network elements (A) tries to set up at least one further connection (P2PR2) to the other involved network element (B), and where on first set-up of a further connection the first connection (P1PR1) is supplemented or replaced by an other further connection (P1PR2), and the mode of communication is changed such that all further connections (P1PR2, P2PR2) together are controlled by a common second protocol (PR22).

2. Method according to claim 1, **characterized in, that** prior to setting up a further connection the data necessary for setting up and combining with the first connection are exchanged via the first connection using the first protocol (P1PR1).

3. Method according to claim 1, **characterized in, that** the network element trying to set up at least one further connection is the initiating network element.

4. Method according to claim 3, **characterized in, that** the initiating network element is informed by the responding network element, when setting up at least one further connection should be considered.

5. Network element (NE) of a telecommunication's network, especially telecommunication's terminal for the Internet or an intranet, that is built such that it can operate according to claim 1 as initiating or as responding network element.

6. Computer program for carrying a communication between two network elements (NE) of a telecommunication's network, especially telecommunication's terminals for the Internet or an intranet, **wherein** said computer program, when executed on a network element according to claim 5, causes said network element to operate according to the method of claim 1.

7. Computer program product for carrying a communication between two network elements of a telecommunication's network, especially telecommunication's terminals for the Internet or an intranet, comprising a computer readable medium having a computer readable program, **wherein** said computer readable program, when executed on a network element according to claim 5, causes said network element to operate according to the method of claim 1.

8. Transferring a computer program according to claim 6.

## Amended claims

### Amended claims in accordance with Rule 137(2) EPC.

**1.** Method for carrying a communication between two network elements of a telecommunication's network, especially telecommunication's terminals for the Internet or an intranet, with at least one of which having available at least two independent access paths (A1, A2) to the telecommunication's network, **wherein** initially from a first, initiating network element (A) a first connection of a first kind (P1PR1) to a second (B), responding network element is set up that is directed via a first access path (A1) of the at least two independent access paths (A1, A2), where the first connection (P1PR1) is controlled by a first protocol (PR1) apt for controlling single communication paths, where subsequent to the set-up of the first connection of the first kind (P1PR1) either of the involved network elements (A) tries to set up at least one connection of the second kind (P2PR2) to the other involved network element (B), and where on first set-up of a connection of the second kind the first connection of the first kind (P1PR1) is supplemented or replaced by an other connection of the second kind (P1PR2), and the communication is changed such that all connections of the second kind (P1PR2, P2PR2) together are controlled by a common second protocol (PR2).

**2.** Method according to claim 1, **characterized in, that** prior to setting up a connection of the second kind the data necessary for setting up and combining with the first connection of the first kind are exchanged via the first connection of the first kind using the first protocol (P1PR1).

**3.** Method according to claim 1, **characterized in, that** the network element trying to set up at least one connection of the second kind is the initiating network element.

**4.** Method according to claim 3, **characterized in, that** the initiating network element is informed by the responding network element, when setting up at least one connection of the second kind should be considered.

**5.** Network element (NE) of a telecommunication's network, especially telecommunication's terminal for the Internet or an intranet, that is built such that it can operate as initiating or as responding network element in a method for carrying a communication between two network elements of a telecommunication's network, especially telecommunication's terminals for the Internet or an intranet, with at least one of which having available at least two independent access paths (A1, A2) to the telecommunication's network, wherein the network element further is built such that initially from a first, initiating network element (A) a first connection of a first kind (P1PR1) to a second (B), responding network element is set up that is directed via a first access path (A1) of the at least two independent access paths (A1, A2), where the network element further is built such that the first connection (P1PR1) is controlled by a first protocol (PR1) apt for controlling single communication paths, where the network element further is built such that subsequent to the set-up of the first connection of the first kind (P1PR1) either of the involved network elements (A) tries to set up at least one connection of the second kind (P2PR2) to the other involved network element (B), and where the network element further is built such that on first set-up of a connection of the second kind the first connection of the first kind (P1PR1) is supplemented or replaced by an other connection of the second kind (P1PR2), and the communication is changed such that all connections of the second kind (P1PR2, P2PR2) together are controlled by a common second protocol (PR2).

**6.** Computer program for carrying a communication between two network elements (NE) of a telecommunication's network, especially telecommunication's terminals for the Internet or an intranet, wherein said computer program, when executed on a network element according to claim 5, causes said network element to operate according to the method of claim 1.

**7.** Computer program product for carrying a communication between two network elements of a telecommunication's network, especially telecommunication's terminals for the Internet or an intranet, comprising a computer readable medium having a computer readable program, wherein said computer readable program, when executed on a network element according to claim 5, causes said network element to operate according to the method of claim 1.

**8.** Transferring a computer program according to claim 6.
